(19) Europäisches Patentamt
European Patent Office
Office européen des brevets

(11) **EP 4 416 691 B1**

(12) **EUROPEAN PATENT SPECIFICATION**


(45) Date of publication and mention of the grant of the patent:
**15.07.2026 Bulletin 2026/29**

(21) Application number: **23828635.5**

(22) Date of filing: **22.11.2023**

(51) International Patent Classification (IPC):
***G06T 11/00*** *(2026.01)*

(52) Cooperative Patent Classification (CPC):
**G06T 11/00**

(86) International application number:
**PCT/US2023/080932**

(87) International publication number:
**WO 2024/112901 (30.05.2024 Gazette 2024/22)**


(54) **CROSS-DOMAIN IMAGE DIFFUSION MODELS**

DOMÄNENÜBERGREIFENDE BILDDIFFUSIONSMODELLE

MODÈLES DE DIFFUSION D'IMAGE INTER-DOMAINES


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.11.2022 US 202263427655 P**

(43) Date of publication of application:
**21.08.2024 Bulletin 2024/34**



(73) Proprietor: **Google LLC**
**Mountain View, CA 94043 (US)**

(72) Inventors:
- **VOYNOV, Andrey**
  **6789141 Tel Aviv (IL)**
- **ABERMAN, Kfir**
  **San Mateo, California 94402 (US)**
- **COHEN-OR, Daniel**
  **6789141 Tel Aviv (IL)**

(74) Representative: **Hau, Darren Jun Wai et al**
**Venner Shipley LLP**
**St James's**
**79 Oxford Street**
**Manchester M1 6EG (GB)**



(56) References cited:
- **TENGFEI WANG ET AL: "Pretraining is All You Need for Image-to-Image Translation", ARXIV.ORG, CORNELL UNIVERSITY LIBRARY, 201 OLIN LIBRARY CORNELL UNIVERSITY ITHACA, NY 14853, 25 May 2022 (2022-05-25), XP091233186**
- **FLORINEL-ALIN CROITORU ET AL: "Diffusion Models in Vision: A Survey", ARXIV.ORG, CORNELL UNIVERSITY LIBRARY, 201 OLIN LIBRARY CORNELL UNIVERSITY ITHACA, NY 14853, 10 September 2022 (2022-09-10), XP091314787**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 416 691 B1

## Description

CROSS-REFERENCE TO RELATED APPLICATION

This application claims priority to U.S. Provisional Application No. 63/427,655, filed on November 23, 2022. The disclosure of the prior application is considered part of the disclosure of this application.

BACKGROUND

This specification relates to processing images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step. Wang, Tengfei, et al. "Pretraining is all you need for image-to-image translation." arXiv preprint arXiv:2205.12952, 25 May 2022, discloses using pretraining to boost general image-to-image translation. Each image-to-image translation problem is regarded as a downstream task and a framework is introduced that adapts a pretrained diffusion model to accommodate various kinds of image-to-image translation. Adversarial training is proposed to enhance texture synthesis in diffusion model training, in conjunction with normalized guidance sampling to improve the generation quality. Croitoru, Florinel-Alin, et al. "Diffusion models in vision: A survey."arXiv preprint arXiv:2209.04747v1, 10 Sep 2022, provides a review of articles on denoising diffusion models applied in vision, comprising both theoretical and practical contributions in the field. Three generic diffusion modeling frameworks are identified and presented, which are based on denoising diffusion probabilistic models, noise conditioned score networks, and stochastic differential equations. Further discussed are the relations between diffusion models and other deep generative models, including variational autoencoders, generative adversarial networks, energy-based models, autoregressive models and normalizing flows. A multi-perspective categorization of diffusion models applied in computer vision is introduced.

SUMMARY

This specification describes a system implemented as computer programs on one or more computers in one or more locations that performs cross-domain image translation, i.e., translates an input image in a source domain into an output image in a target domain, by using a diffusion model and a latent spatial feature predictor.

In some implementations, the system can transfer a style of an image to other desired styles while the content presented in the image is retained substantially. For example, a sketch image (e.g., a free-hand or hand-drawn sketch) may be translated by using the system into a photo, but the type as well as the shape of the object in the sketch image remains substantially the same. Thus, the system can generate high-fidelity images of an object depicted in a hand-drawn sketch or rough drawing or the system can enhance a source image.

Particular embodiments of the subject matter described in this specification can be implemented so as to realize one or more of the following advantages.

The spatially guided diffusion framework as described in this specification can provide for cross-domain image translation, where a source image showing a source object can be translated, through an iterative diffusion process, into a target image showing the same source object (or an object in the same class or category as the source object) but of different styles or domains. The described framework provides the flexibility and generalizability that allows the cross-domain image translation process to perform well on out-of-domain source images, even including free-hand style sketch drawings. In addition to offering a robust and expressive way to generate images that can follow the guidance of source images of diverse styles or domains, the described framework can be applied to many other image enhancement tasks, such as saliency-guided in-painting and horizon control.

Advantageously, the cross-domain image translation process as discussed herein relies on a guidance dependent on spatial feature similarities between the source image and intermediate representations of the target image generated by a diffusion model during the iterative diffusion process. In particular, the guidance is provided by a parameter efficient, differential guiding map predictor (also referred to as a latent spatial feature predictor) which can be trained using no more than a few thousands of images-which is a few orders of magnitude less than the amount that would be required to train a common image-to-image translation model.

Moreover, unlike previous approaches for guiding a diffusion model, the described framework does not require to separately train a dedicated model or a specialized encoder to map a source image into the latent space of the diffusion model in order to compute the guidance from source images of different domains. Implementation of the described framework thus requires reduced consumption of computational resources, e.g., reduced processor cycles, reduced memory, reduced power consumption, relative to these conventional approaches.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example image generation system.
FIG. 2 is an example illustration of operations performed by a diffusion model and a latent spatial feature predictor to generate a modified updated latent representation of an output image.
FIG. 3 is an example illustration of training a latent spatial feature predictor.
FIG. 4 is a flow diagram of an example process for generating an output image in a target domain.
FIG. 5 is a flow diagram of an example process of generating a modified updated latent representation of an output image.
FIG. 6 is a flow diagram of an example process of generating an updated latent representation of an output image.

Like reference numbers and designations in the various drawings indicate like elements.

DETAILED DESCRIPTION

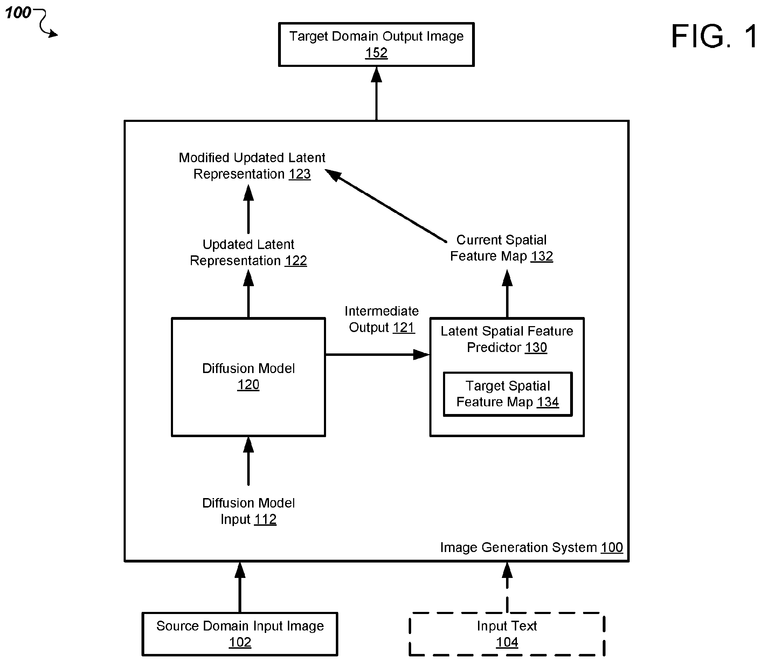

FIG. 1 is a diagram of an example image generation system 100. The data generation system 100 is an example of a system implemented as computer programs on one or more computers in one or more locations that receives an input image 102 and generates an output image 152 based on the input image 102.

In particular, the image generation system 100 generates the output image 152 by performing a cross-domain image translation process on the input image 102. That is, the image generation system 100 translates the input image 102 in a source domain to a corresponding output image 152 in a target domain.

As used herein, the term "image" can mean a digital image, such as a two-dimensional image or a three-dimensional image, or consecutive frames of video. Images may be captured by a scanner, a camera, a specially-adapted sensor array (such as CCD array), a microscope, a smartphone camera, a video camera, etc., and stored as digital data, such a compressed image file, RAW data, etc. An image may comprise a plurality of pixel intensity values.

As used herein, an image domain, or simply "domain," specifies a particular set of visual aspects present in images from the image domain. Different images from different image domains are usually visually distinguishable from each other. For example, photos, cartoons, caricatures, oil paintings, sketches, and watercolor may be considered as different image domains. Similarly, different seasons, geographic locations, weathers, times-of-day (e.g., day to night), and pixel resolutions may also be considered as different image domains. A few additional non-limiting examples are as follows.

For example, the source domain is a sketch domain (where the input image 102 is a sketch image that depicts an object) and the target domain is a photographic image domain (where the output image 152 is a photographic image that depicts the same object as the sketch image), or vice versa.

In another example, the source domain is a grayscale image domain (where the input image 102 is a grayscale image that depicts a scene) and the target domain is a color image domain (where the output image 152 is a color image that depicts the same scene as the grayscale image), or vice versa.

In another example, the source domain is a map domain (where the input image 102 is a map of a geographic region), and the target domain is an aerial photo domain (where the output image 152 is an aerial photo of the geographic region), or vice versa.

In yet another example, the source domain is a thermal image domain (where the input image 102 is a thermal image that depicts an object), and the target domain is an RGB image domain (where the output image 152 is an RGB image that depicts the same object as the thermal image), or vice versa.

In yet another example, the source domain is a first medical image domain (where the input image 102 is a medical image of a patient's body part that was taken using a first method (e.g., Mill scan), and the target domain is a second medical domain (where the output image 152 is a medical image of the same body part that was taken using a second, different method (e.g., computerized tomography (CT) scan), or vice versa.

The image generation system 100 can obtain the input image 102 in any of a variety of ways. For example, the system can receive the input image 102 as an upload from a remote user of the system over a data communication network, e.g., using an application programming interface (API) made available by the system. As another example, the system can receive an input from a user specifying which image that is already maintained by the system or another system that is accessible by the system should be used as the input image 102.

In some implementations, the cross-domain image translation process is conditioned on just the input image 102, i.e., without conditioning on any additional data other than image data. In these implementations, the output image 152 generated by the image generation system 100 approximate the domain of the training images that were used during the training of the image generation system 100.

In other implementations, the cross-domain image translation process is conditioned on not only the input image 102 but also input text 104. That is, the image generation system 100 receives both an input image 102 and input text 104, and generates the output image 152 based on the input image 102 and the input text 104.

The input text 104, when received, may specify a particular object (or a particular class of objects) that should appear in the output image. Additionally or alternatively, the input text 104, when received, may specify the target domain that the output image 152 should reside in.

For example, the input text could be "An origami bicycle." In this example, "an origami bicycle" defines the particular object. As another example, the input text could be "Marc Chagall drawing of a rooster." In this example, "Marc Chagall drawing" defines the target domain, and "a rooster" defines the particular object. As yet another example, the input text could be "A photograph of a mushroom." In this example, "photograph" defines the target domain, and "a mushroom" defines the particular object.

These foregoing examples are not exhaustive, and it may be readily appreciated that the input text 104 may include any other content from which the particular object, the target domain, or both can be determined.

Like the input image 102, the image generation system 100 can obtain the input text 104 in any of a variety of ways. For example, the input text may be a text prompt submitted by a user of the system who also provided the input image, and the system can generate the output image conditioned on both the input image and the input text, i.e., generate the output image in the particular domain that shows the particular object (or an object belonging to the particular class). As another example, the input text can include pre-stored text that is retrieved by the system from a storage device accessible by the system.

To generate the output image 152, the image generation system 100 uses a diffusion model neural network 120 and a latent spatial feature predictor 130 by performing a reverse diffusion process across multiple reverse diffusion time steps.

The diffusion model neural network 120 (or "diffusion model" for short) can be any appropriate diffusion model neural network that has been trained, e.g., by the image generation system 100 or another training system, to, at any given reverse diffusion step, process a diffusion model input 112 that includes at least the current latent representation of the output image 152 (for the reverse diffusion time step) to generate an updated latent representation 122 of the output image (for the reverse diffusion time step).

For example, the diffusion model 120 can have been trained on a set of training images using a denoising score matching objective, to generate the updated latent representation by generate a diffusion model output that specifies a density score gradient estimation which, in turn, defines a possible data distribution of the output image from which the updated latent representation 122 of the output image can be determined through sampling. The denoising technique can be as described in Jonathan Ho, Ajay Jain, and Pieter Abbeel, Denoising diffusion probabilistic models; Advances in Neural Information Processing Systems, 33:6840-6851, 2020. Other denoising techniques appropriate for the systems and methods described herein can also be used.

The diffusion model 120 can have any appropriate neural network architecture that enables it to perform its described function. For example, the diffusion model 120 can be a convolutional neural network that includes multiple convolutional layers. As another example, the diffusion model 120 can be an attention neural network that includes multiple attention layers, e.g., self-attention layers or cross-attention layers. As a particular example, the diffusion model 120 can have a U-Net architecture with self-attention.

In these examples and other examples, the diffusion model 120 includes a plurality of intermediate layers followed by an output layer and generates the updated latent representation 122 (or another output from which the updated latent representation 122 can be derived, e.g., by a data sampling engine which performs sampling from the other output) as the output of the output layer of the diffusion model 120.

These intermediate layers are referred to as "intermediate" because the intermediate outputs 121 generated by the intermediate layers are intermediate data that is subsequently processed to generate the updated latent representation 122 of the output image, i.e., intermediate data that will be further processed by one or more additional neural network layers, e.g., the output layer or another layer arranged subsequent to the intermediate layers, of the diffusion model 120 to generate the updated latent representation 122.

To generate a guidance that "guides" the diffusion model 120 through the reverse diffusion process that facilitates effective cross-domain image translation, at each of one or more of the multiple reverse diffusion time steps, the image generation system 100 uses the latent spatial feature predictor 130 to generate a current spatial feature map 132 from the intermediate outputs 121 that have been generated by the diffusion model 120 while generating the updated latent representation 122 of the output image at the reverse diffusion time step.

The latent spatial feature predictor 130 is a neural network that receives an input that includes at least the one or more intermediate outputs 121, and processes the input to generate the current spatial feature map 132 (for the reverse diffusion time step). The latent spatial feature predictor 130 can have been configured, i.e., through training, to generate the current spatial feature map 132 that includes any a range of spatial features extracted from the intermediate outputs 121. For example, the spatial features can be or include edge features, saliency features, semantic segmentation features, or a combination thereof. Other spatial features are possible.

At each of the one or more reverse diffusion time steps, the image generation system 100 then compares the current spatial feature map 132 to a target spatial feature map 134 to determine a similarity measure between the two spatial feature maps.

Unlike the current spatial feature map 132 which is generated based on the intermediate outputs 121 generated by the diffusion model 120, the target spatial feature map 134 is generated based on the input image 102 in the source domain.

In some implementations, the image generation system 100 uses the latent spatial feature predictor 130 to generate the target spatial feature map 134. For example, the latent spatial feature predictor 130 receives an input that includes the source image, and processes the input to generate the target spatial feature map 134. As another example, the latent spatial feature predictor 130 receives an input that includes data derived from the source image (e.g., an encoded representation, a color inverted representation, a downsampled representation, or an otherwise processed representation, of the source image), and processes the input to generate the target spatial feature map 134. As another example, the latent spatial feature predictor 130 processes both the original source image and the data derived from the source image to generate the target spatial feature map 134.

In some other implementations, the image generation system 100 does not use the latent spatial feature predictor 130, and instead uses some different spatial feature extraction algorithms or a different neural network, to generate the target spatial feature map 134 by processing the input image, data derived from the input image, or both to extract spatial features.

The latent spatial feature predictor 130 can have any appropriate neural network architecture that enables it to perform its described function. For example, the latent spatial feature predictor 130 can include any appropriate types of neural network layers (e.g., fully connected layers, attention layers, convolutional layers, and so forth) in any appropriate number (e.g., 5 layers, or 10 layers, or 20 layers) and connected in any appropriate configuration (e.g., as a directed graph of layers).

As a particular example, the latent spatial feature predictor 130 can be configured as a multi-layer perceptron (MLP) that includes a predetermined number of fully connected layers that are each associated with a ReLU activation function. In this particular example, the latent spatial feature predictor 130 can be a lightweight MLP, and the predetermined number of fully connected layers is lower, sometimes much lower than, the total number of layers included in the diffusion model 120.

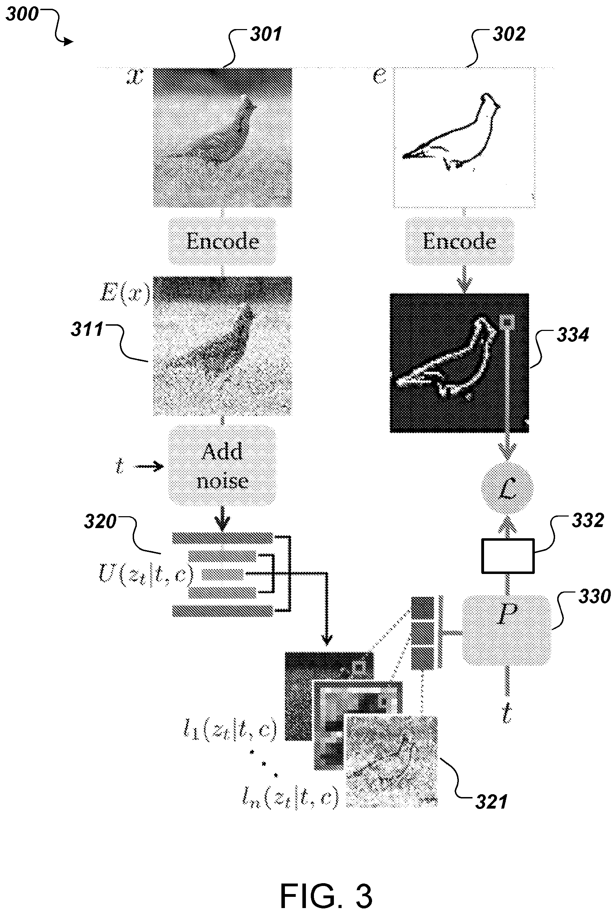

The latent spatial feature predictor 130 can be trained using the (pre-trained) diffusion model 120 to optimize a self-supervised training objective function on appropriate training data, as will be described further below with reference to FIG. 3. However, the diffusion model 120 may have been pre-trained, e.g., on the denoising score matching objective, independently of the latent spatial feature predictor 130. That is, the latent spatial feature predictor 130 generally was not used to guide the reverse diffusion process during training of the diffusion model 120, and the training process of the latent spatial feature predictor 130 does not update parameter values of the pre-trained diffusion model 120. That is, the parameter values of the pre-trained diffusion model 120 are held fixed in this instance.

Moreover, the data used for training the latent spatial feature predictor 130 can be orders of magnitude smaller than data used for training the diffusion model 120. For example, the training data comprises millions or billions of images for training the diffusion model 120 to determine the pre-trained parameter values of the diffusion model 120, while the training process for the latent spatial feature predictor 130 can use no more than a few thousand images.

The training process for the latent spatial feature predictor 130 is thus much less computationally intensive than the training process for the diffusion model 120. Thus, while the training process for the diffusion model 120 needs to be performed in a datacenter having tens or hundreds or thousands of computers, the training process for the latent spatial feature predictor 130 can be performed on a mobile device or a single, Internet-enabled device.

At each of the one or more reverse diffusion time steps, the image generation system 100 determines, based on the determined similarity measure, one or more modifications to the updated latent representation 122 generated by the diffusion model 120 to generate the modified updated latent representation 123 for the reverse diffusion time step, as will be described further below.

Because the latent spatial feature predictor 130 is used to "guide" the reverse diffusion process to generate the output image 152, the output image 152 will have the visual aspects of the target domain specified by the input text 104, and will depict the object with improved fidelity (e.g. improved accuracy) relative to the input image 102, compared to other image generation systems which do not use a latent spatial feature predictor. Additionally, this improvement can be realized with minimal computational overhead, i.e., with only minimal increases in computational complexity and resource consumption, e.g., processing power and memory consumption, during both training and inference.

After the last reverse diffusion time step, the image generation system 100 outputs the updated latent representation as the final output image 152. For example, the image generation system 100 can provide the output image 152 for presentation to a user on a user computer or store the output image 152 for later use.

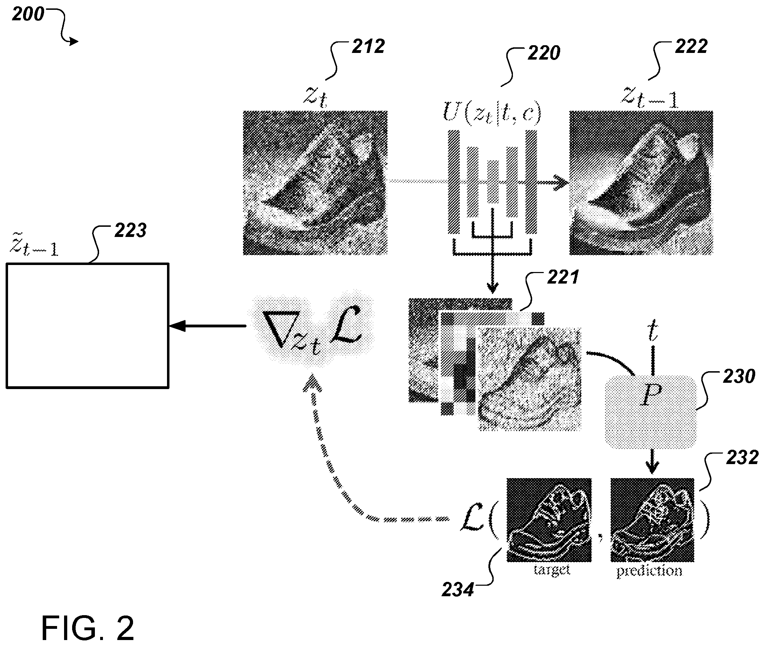

FIG. 2 is an example illustration 200 of operations performed by a diffusion model 220 and a latent spatial feature predictor 230. An image generation system, e.g., the image generation system 100 of FIG. 1, can perform these operations at a given reverse diffusion time step t in a reverse diffusion process to generate, from a current latent representation 212 of an output image for the reverse diffusion time step t, a modified updated latent representation 223 of the output image for the reverse diffusion time step t.

At the given reverse diffusion time step t, the diffusion model 220 receives a diffusion model input. The diffusion model input includes (i) the input text *c*, (ii) data specifying the given reverse diffusion time step *t* (which in turn identifies a noise level for the given time step because different time steps across the reverse diffusion process are generally associated with different noise levels), and (iii) the current latent representation $z_t$ 212 of the output image for the guided reverse diffusion step *t*.

The diffusion model 220 processes the received diffusion model input to generate an updated latent representation $z_{t-1}$ 222 of the output image for the reverse diffusion time step t (note that the updated latent representation is labeled "$z_{t-1}$" because it will be used as the current latent representation for the next reverse diffusion time step $z_{t-1}$). The updated latent representation $z_{t-1}$ 222 of the output image can be generated stochastically by the diffusion model 220, e.g., where the output of the diffusion model 220 parameterizes or otherwise defines a data distribution from which the updated latent representation can be sampled.

For example, when trained using the DDPM objective mentioned above, the diffusion model 220 can process the diffusion model input to generate a diffusion model output that specifies a density score gradient estimation. In this example, the updated latent representation of the output image can then be generated by sampling, e.g., using a Langevin-like sampler, from a possible data distribution of the output image approximated by the density score gradient estimation.

As illustrated in FIG. 2, the diffusion model 220 has a U-net architecture that has a plurality of layers that are stacked. Processing the received diffusion model input to generate the updated latent representation $z_{t-1}$ 222 thus involves passing data, e.g., respective intermediate outputs 221 generated by the multiple intermediate layers, between the plurality of layers in a certain layer order.

The respective intermediate outputs 221 generated by one or more of the multiple intermediate layers of the diffusion model 220 will be used by the latent spatial feature predictor 230 to generate a current spatial feature map 232 for the reverse diffusion time step *t*. In particular, these respective intermediate outputs 221 were generated by the diffusion model 220 while it processes the diffusion model input 212 for the reverse diffusion time step *t* to generate the updated latent representation $z_{t-1}$ 222 of the output image for the reverse diffusion time step *t*.

In some implementations, the latent spatial feature predictor 230 receives a predictor input that includes the respective intermediate output 221 generated by a predetermined intermediate layer of the diffusion model 220, and processes the predictor input to generate a predictor output that includes the current spatial feature map 232. The predetermined intermediate layer can be any intermediate layer of the diffusion model 220.

In some other implementations, e.g., as illustrated by FIG. 2, the latent spatial feature predictor 230 receives a predictor input that includes the respective intermediate outputs 221 generated by multiple predetermined intermediate layers of the diffusion model 220, and processes the predictor input to generate a predictor output that includes the current spatial feature map 232.

For example, the image generation system can generate an input tensor, e.g., a three-dimensional tensor, based on the intermediate outputs 221, e.g., by resizing them to have same spatial dimensions, i.e., the same horizontal and vertical dimensions, as each other (and, correspondingly, the input tensor), and concatenating the multiple resized intermediate outputs 221 along a channel dimension of the input tensor. The image generation system then provides the input tensor as a part of the predictor input to the latent spatial feature predictor 230.

In any of these implementations, the predictor input received by the latent spatial feature predictor 230 can also include other data in addition to the respective intermediate output(s) 221. For example, the predictor input can include data specifying the given reverse diffusion time step *t*. As another example, the predictor input can include the positional encoding of the given reverse diffusion time step $t$: $sin(2\pi t \cdot 2^{-l})$, $l = 0,...,9$.

The image generation system determines, based on a similarity measure between the current spatial feature map 232 and the target spatial feature map 234, one or more modifications to the updated latent representation $z_{t-1}$ 222 that has been generated by the diffusion model 220 to generate the modified updated latent representation $\tilde{z}_{t-1}$ 223 of the output image for the reverse diffusion time step *t*. The image generation system generally modifies the updated latent representation $z_{t-1}$ 222 to improve the similarity measure, i.e., such that the modified updated latent representation $\tilde{z}_{t-1}$ 223 is more similar to the target spatial feature map 234.

In some implementations, e.g., as illustrated by FIG. 2, modifying the updated latent representation 222 involves computing a gradient of a similarity function that evaluates the similarity measure with respect to values included in the current latent representation $z_t$ 212 of the output image for the reverse diffusion time step t, and then determining one or more modifications to the updated latent representation 222 from the gradient of the similarity function.

For example, the similarity function can be defined as

$$\mathcal{L}(\tilde{E}, E(e)) = \|\tilde{E} - E(e)\|^2,$$

where $\tilde{E} = P(F)$ represents the current spatial feature map, which is generated by the latent spatial feature predictor $P$ from the input tensor $F$, and $E(e)$ represents the target spatial feature map, which is generated from an encoded (or otherwise processed) representation of the input image 102.

**In** this example, the image generation system can compute an anti-gradient $-\nabla_{z_t}\mathcal{L}$ of the similarity function $\mathcal{L}$ with respect to the values included in the current latent representation $z_t$ 212. The image generation system can then determine the modified updated latent representation $\tilde{z}_{t-1}$ 223 by applying, e.g., adding, the anti-gradient $-\nabla_{z_t}\mathcal{L}$ to the updated latent representation $z_{t-1}$ 222:

$$\tilde{z}_{t-1} = z_{t-1} - \alpha \cdot \nabla_{z_t}\mathcal{L},$$

where $\alpha$ represents a guidance strength of the gradient of the similarity function.

Intuitively, this anti-gradient pushes the modified updated latent representation $\tilde{z}_{t-1}$ 223 to have spatial features, e.g., edge features, a saliency features, or semantic features, to become more similar to those included in the target spatial feature map 234.

In this example and many other examples, because the impact of the gradient of the similarity function may depend on its relative magnitude to the reverse diffusion time step, $\alpha$ can be normalized. Specifically, the image generation system can normalize the gradient by using a normalization term that is dependent on a relative magnitude of the gradient to the updated latent representation for the reverse diffusion time step.

For example, $\alpha$ can be defined as:

$$\alpha = \frac{\|z_t - z_{t-1}\|_2}{\|\nabla_{z_t}\mathcal{L}\|_2} \cdot \beta$$

where $\beta$ is a predetermined constant that takes values of order $O(1)$.

FIG. 3 is an example illustration 300 of training a latent spatial feature predictor 330 using a diffusion model 320 on training data. The diffusion model 320 can have been pre-trained, e.g., by the same system that trains the latent spatial feature predictor 330 or another system, and can have pre-trained parameter values determined as a result of the pre-training process.

For example, the training data can include multiple training tuples *(x, e, c)* that each include (i) an image *x*, (ii) a spatial feature map *e* of the image, and (iii) a text prompt *c* that describes the image. For example the text prompt can be a caption of the image x. The spatial feature map *e* is paired with the image x and can generally be generated from the image *x* in any appropriate way, e.g., by processing the image *x* using a known computer vision algorithm, e.g., an edge detection algorithm, a semantics segmentation algorithm, or another learned spatial feature extraction algorithm.

For a given training tuple, an encoder neural network (e.g., an encoder neural network of the diffusion model 320) processes the image *x* 301 to generate an encoded representation $E(x)$ 311 of the image *x*; the encoder neural network also processes the spatial feature map *e* 302 to generate an encoded representation $E(e)$ 334 of the spatial feature map *e*.

In some implementations, noise $\xi$ (e.g., time-dependent noise that is dependent on a current time step *t*) is then added to the encoded representation $E(x)$ 311 to generate a noisy encoded representation: $zt = \alpha_t \cdot E(x) + {}_t \cdot \xi$, where $0 \le \alpha_t, {}_t \le 1$ are blending scalars that are directed by the noise scheduling of the diffusion model.

The diffusion model 320 processes, in accordance with pre-trained parameter values of the diffusion model, the (noisy) encoded representation of the image *x* to generate an updated latent representation of the image *x*. During its processing of the (noisy) encoded representation, the diffusion model 320 generates, at each of one or more layers, a respective intermediate output 321. For example, FIG. 3 illustrates that the diffusion model 320 generates *n* intermediate outputs $l_1(z_t|t, c), ..., l_n(z_t|t, c)$ at the 1$^{st}$ to the $n^{th}$ layers of the model, respectively.

The latent spatial feature predictor 330 receives a predictor input that includes (i) the one or more respective intermediate outputs 321 and, optionally, (ii) data specifying the current time step *t,* and (iii) positional encoding of the current time step $t$, and processes the predictor input, in accordance with current parameter values of the latent spatial feature predictor 330, to generate a current spatial feature map 332.

A loss function that measures a difference between (i) the current spatial feature map 332 and (ii) the encoded representation 334 of the spatial feature map $e$ is evaluated. For example, the loss function can measure a per-pixel difference between (i) the current spatial feature map 332 and (ii) the encoded representation 334 of the spatial feature map $e$ that is defined as:

$$\mathcal{L} = \mathop{\mathbb{E}}_{(x,e,c)\sim\mathcal{D}} \mathop{\mathbb{E}}_{\substack{t\sim\mathcal{U}([0,1]) \\ \xi\sim\mathcal{N}(0,1)}} \sum_{i,j} \| P(\mathbf{F}(z_t|c,t)_{i,j}, t) - E(e)_{ij} \|^2,$$

where $P(F(z_t|c, t)_{i,j}, t)$ is the current spatial feature map generated by the latent spatial feature predictor $P$ from predictor input that includes an input tensor $F(z_t|c, t)_{i,j}$ generated based on resizing and concatenating the respective intermediate outputs, $E(e)_{i,j}$ is the encoded representation generated by the encoder from the spatial feature map $e$, and $i, j$ are pixel coordinates, e.g., in the current spatial feature map.

The current parameter values of the latent spatial feature predictor 330 can then be updated by using a conventional machine learning training technique, e.g., by applying a gradient descent with backpropagation training technique that uses a conventional optimizer, e.g., stochastic gradient descent, RMSprop, or Adam optimizer, to optimize the loss function.

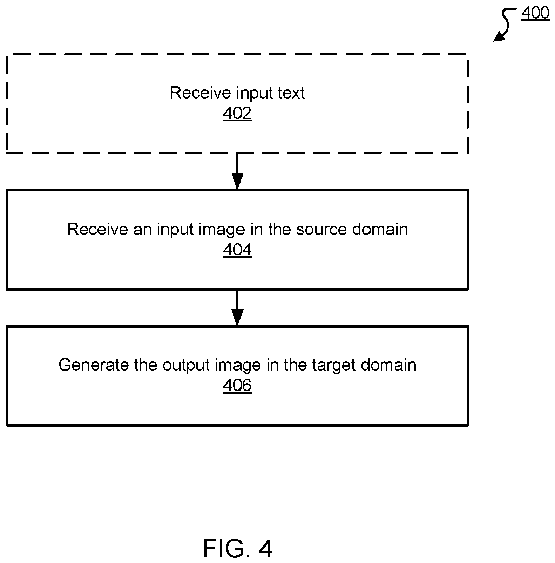

FIG. 4 is a flow diagram of an example process 400 for generating an output image in a target domain. For convenience, the process 400 will be described as being performed by a system of one or more computers located in one or more locations. For example, an image generation system, e.g., the image generation system 100 depicted in FIG. 1, appropriately programmed in accordance with this specification, can perform the process 400.

Optionally, in some cases, the system receives input text (step 402). When received, the input text may specify a particular object (or a particular class of objects) that should appear in the output image. Additionally or alternatively, the input text may specify a target domain that the output image should reside in.

The system receives an input image in a source domain which is different from the target domain (step 404). The input image may depict the particular object (or an object belonging to the particular object class) specified by the input text.

The system generates the output image in the target domain (step 406). The output image may depict the particular object (or the object belonging to the particular object class). That is, the system translates the input image in the source domain into the output image in the target domain, while the content presented in the input image is retained substantially in the output image. Step 406 can be performed by using a diffusion model and a latent spatial feature predictor, as will be explained in greater detail below. The generated image may be based upon images that the diffusion model was trained on.

To generate the output image, the system iteratively uses the diffusion model to update a latent representation of the output image at each of multiple reverse diffusion time steps over a reverse diffusion process, and iteratively uses the latent spatial feature predictor to generate a guidance to guide the diffusion model at each of a subset of the multiple reverse diffusion time steps.

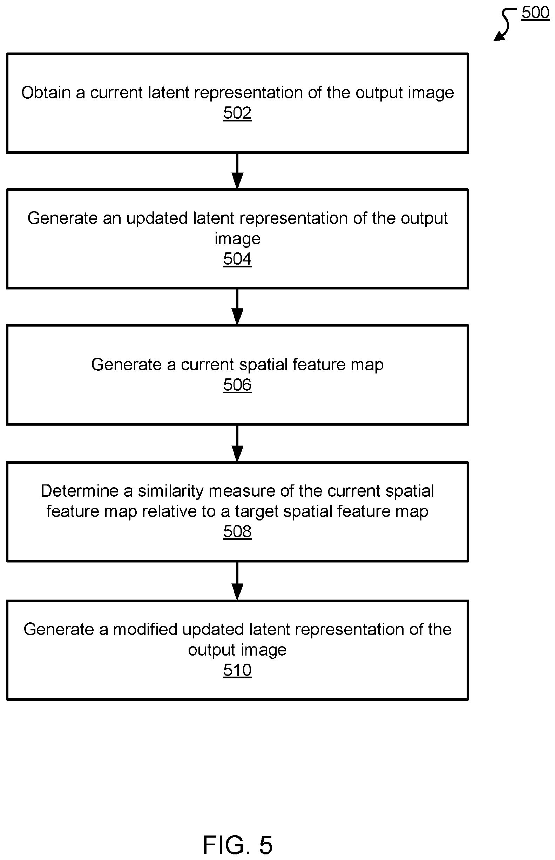

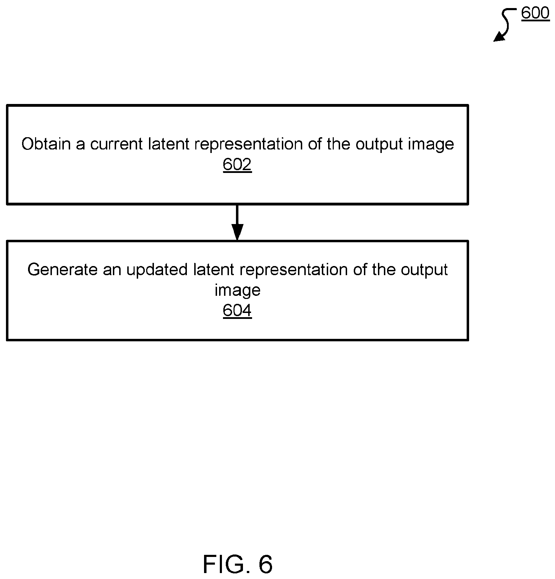

That is, the system performs a reverse diffusion process over multiple reverse diffusion time steps to generate the output image, where the computation at some of the reverse diffusion time steps (referred to as "guided reverse diffusion time steps," corresponding to process 500 explained in FIG. 5) makes use of the latent spatial feature predictor, and the computation at others of the reverse diffusion time steps (referred to as "guidance-free reverse diffusion time steps," corresponding to process 600 explained in FIG. 6) does not make use of the latent spatial feature predictor.

For example, the reverse diffusion process can include a first number of guided reverse diffusion time steps, followed by a second number of guidance-free reverse diffusion time steps, or vice versa. As another example, the guided reverse diffusion time steps and the guidance-free reverse diffusion time steps can interleave each other across the reverse diffusion process.

FIG. 5 is a flow diagram of an example process 500 for generating a modified updated latent representation of an output image. For example, an image generation system, e.g., the image generation system 100 depicted in FIG. 1, appropriately programmed in accordance with this specification, can perform the process 500. Process 500 can be performed at each guided reverse diffusion time steps over the over the reverse diffusion process.

The system obtains a current latent representation of the output image for the guided reverse diffusion time step (step 502). If the guided reverse diffusion time step is the first reverse diffusion time step in the reverse diffusion process, the current latent representation is an initial latent representation. For subsequent reverse diffusion time steps, the current latent representation is the modified updated latent representation that has been generated in the immediately preceding guided reverse diffusion time step (or the updated latent representation that has been generated in the immediately preceding guidance-free reverse diffusion time step).

The initial latent representation (or, analogously, the updated latent representation) has the same dimensionality as the output image but has different values. That is, the initial latent representation (or, analogously, the updated latent representation) includes multiple variables and the output image includes the same number of variables, but the values for these variables will generally differ.

The system processes, using the diffusion model, a diffusion model input that includes (i) the input text (when received), (ii) data specifying the guided reverse diffusion time step (which in turn identifies a noise level for the guided reverse diffusion time step), and (iii) the current latent representation of the output image for the guided reverse diffusion step, to generate an updated latent representation of the output image for the guided reverse diffusion time step (step 504).

For example, the diffusion model can process the diffusion model input to generate a diffusion model output that specifies a density score gradient estimation, and the updated latent representation of the output image can be generated by sampling, e.g., using a Langevin-like sampler, from a possible data distribution of the output image approximated by the density score gradient estimation.

The system processes, using the latent spatial feature predictor, one or more intermediate outputs generated by one or more intermediate layers of the diffusion model while generating the updated latent representation of the output image for the guided reverse diffusion time step to generate a current spatial feature map (step 506).

For example, the system can generate an input tensor from the one or more intermediate outputs, and then provide the input tensor as input to the latent spatial feature predictor for processing to generate the current spatial feature map.

The system determines a similarity measure of the current spatial feature map relative to a target spatial feature map (step 508). The target spatial feature map is generated by the system based on the input image, data derived from the input image, or both, e.g., by using the latent spatial feature predictor or a different spatial feature extraction algorithm.

The system modifies, based on the similarity measure, the updated latent representation to generate a modified updated latent representation of the output image for the guided reverse diffusion time step (step 510). Specifically, the system can do this by computing a gradient of the similarity function with respect to values included in the current latent representation, and determining one or more updates to the updated latent representation from the gradient of the similarity function.

FIG. 6 is a flow diagram of an example process 600 for generating an updated latent representation of an output image. For example, an image generation system, e.g., the image generation system 100 depicted in FIG. 1, appropriately programmed in accordance with this specification, can perform the process 600. Process 600 can be performed at each guidance-free reverse diffusion time steps over the over the reverse diffusion process.

The system obtains a current latent representation of the output image for the guidance-free reverse diffusion time step (step 602). As explained above, If the guidance-free reverse diffusion time step is the first reverse diffusion time step in the reverse diffusion process, the current latent representation is an initial latent representation. For subsequent reverse diffusion time steps, the current latent representation is the modified updated latent representation that has been generated in the immediately preceding guided reverse diffusion time step (or the updated latent representation that has been generated in the immediately preceding guidance-free reverse diffusion time step).

The system processes, using the diffusion model, a diffusion model input that includes (i) the input text (when received), (ii) data specifying the guidance-free reverse diffusion time step (which in turn identifies a noise level for the guided reverse diffusion time step), and (iii) the current latent representation of the output image for the guided reverse diffusion step, to generate an updated latent representation of the output image for the guidance-free reverse diffusion time step (step 604). In particular, step 604 is performed without using the latent spatial feature predictor and, correspondingly, the updated latent representation that is generated by the diffusion model will not be further modified in the current iteration of process 600.

By repeatedly performing processes 500 (or 600) at each of multiple guided (or guidance-free) reverse diffusion time steps over the reverse diffusion process, the system can generate the output image that resides in the target domain and that depicts the particular object (or an object belonging to the particular object class). The output image can be the (modified) updated latent representation that is generated by the system in the last reverse diffusion time step in the reverse diffusion process.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC. or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user: for example, by sending web pages to a web browser on a user’s device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a JAX framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

## Claims

**1.** A computer-implemented method for generating an output image in a target domain using a diffusion model (120), wherein the method comprises:

> receiving an input image (102) in a source domain, wherein the source domain is different from the target domain;
> generating, by using the diffusion model (120) and a latent spatial feature predictor (130), the output image (152) in the target domain, wherein the latent spatial feature predictor (130) comprises a neural network that is configured to process an input that includes at least one or more intermediate outputs (121) generated by the diffusion model (120) to generate a spatial feature map (132), and wherein the generating comprises, at each of multiple guided reverse diffusion time steps:
>
> > obtaining a current latent representation of the output image for the guided reverse diffusion time step;
> > processing, using the diffusion model (120), a diffusion model input (112) comprising the current latent representation of the output image for the guided reverse diffusion step to generate an updated latent representation (122) of the output image for the guided reverse diffusion time step;
> > processing, using the latent spatial feature predictor (130), one or more intermediate outputs (121) generated by the diffusion model (120) while generating the updated latent representation (122) of the output image for the guided reverse diffusion time step to generate a current spatial feature map (132);
> > determining a similarity measure of the current spatial feature map (132) relative to a target spatial feature map (134) of the input image in the source domain; and

generating a modified updated latent representation (123) of the output image for the guided reverse diffusion time step based on the similarity measure.

2. The method of claim 1, wherein the latent spatial feature predictor (130) comprises a multi-layer perceptron (MLP) neural network that includes multiple fully connected layers with ReLU activations.

3. The method of any one of claims 1-2, wherein the source domain is a sketch image domain, and the target domain is a photographic image domain.

4. The method of any one of claims 1-3, wherein processing, using the latent spatial feature predictor (130), the one or more intermediate outputs (121) generated by the diffusion model (120) comprises:

generating an input tensor from the one or more intermediate outputs (121), comprising:

resizing the one or more intermediate outputs (121) to have same spatial dimensions as the input tensor;
concatenating the one or more resized intermediate outputs along a channel dimension of the input tensor; and

providing the input tensor as input to the latent spatial feature predictor (130).

5. The method of any one of claims 1-4, wherein determining the similarity measure of the current spatial feature map (132) relative to the target spatial feature map (134) of the input image in the source domain comprises:
processing the input image (102), data derived from the input image, or both using the latent spatial feature predictor (130) to generate the target spatial feature map (134).

6. The method of any one of claims 1-5, wherein generating the modified updated latent representation (123) of the output image for the guided reverse diffusion time step based on the similarity measure comprises:

computing a gradient of a similarity function evaluating the similarity measure with respect to values included in the current latent representation of the output image for the guided reverse diffusion time step; and
determining one or more updates to the updated latent representation (122) from the gradient of the similarity function; and optionally

wherein determining the one or more updates to the updated latent representation (122) from the gradient of the similarity function comprises:
normalizing the gradient by using a normalization term that is dependent on a relative magnitude of the gradient to the updated latent representation (122) for the guided reverse diffusion time step.

7. The method of any one of claims 1-6, wherein the diffusion model input (112) further comprises a noise level for the guided reverse diffusion time step.

8. The method of any one of claims 1-7, wherein the generating comprises, at each of multiple guidance-free reverse diffusion time steps:

obtaining a current latent representation of the output image for the guidance-free reverse diffusion time step; and
processing, using the diffusion model (120), a diffusion model input (112) comprising (i) the current latent representation of the output image, and (ii) a noise level for the guidance-free reverse diffusion step to generate an updated latent representation (122) of the output image for the guidance-free reverse diffusion time step without modifying the updated latent representation (122) using the latent spatial feature predictor (130).

9. The method of any one of claims 1-8, wherein the spatial feature map (132) comprises one or more of: an edge feature map, a saliency feature map, or a semantic segmentation feature map; and optionally
wherein numbers of guided reverse diffusion time steps during the generation of the output image are different for different spatial feature maps.

10. The method of any one of claims 1-9, wherein obtaining the current latent representation of the output image for the guided reverse diffusion time step comprises:
using a modified updated latent representation (123) of the output image for an immediately preceding guided reverse diffusion time step as the current latent representation of the output image for the guided reverse diffusion time step.

**11.** The method of any one of claims 1-10, wherein generating the updated latent representation (122) of the output image for the guided reverse diffusion time step comprises:

processing the diffusion model input (112) using the diffusion model (120) to generate a diffusion model output that specifies a density score gradient estimation; and
sampling from a possible data distribution of the output image by using the density score gradient estimation to generate the updated latent representation (122) of the output image.

**12.** The method of any preceding claim, further comprising training the latent spatial feature predictor (130) together with a pre-trained diffusion model to optimize a self-supervised training objective function on multiple training tuples that each comprise (i) an image, (ii) a spatial feature map of the image, and (iii) a text prompt that describes the image; and optionally
wherein training the latent spatial feature predictor (130) does not update parameter values of the pre-trained diffusion model.

**13.** The method of any preceding claim, further comprising:
receiving input text (104) that specifies a particular object class; and wherein:

the input image (102) in the source domain depicts an object belonging to the particular object class;
the output image (152) in the target domain depicts the object belonging to the particular object class; and
the diffusion model input (112) further comprises the received input text (104); and optionally

wherein the input text (104) further specifies the target domain.

**14.** A system comprising one or more computers and one or more storage devices storing instructions that are operable, when executed by the one or more computers, to cause the one or more computers to perform the operations of the respective method of any preceding claim.

**15.** A computer storage medium encoded with instructions that, when executed by one or more computers, cause the one or more computers to perform the operations of the respective method of any one of claims 1 to 13.

## Patentansprüche

**1.** Computerimplementiertes Verfahren zum Generieren eines Ausgabebildes in einer Zieldomäne unter Verwendung eines Diffusionsmodells (120), wobei das Verfahren umfasst:

Empfangen eines Eingabebildes (102) in einer Quelldomäne, wobei die Quelldomäne von der Zieldomäne verschieden ist;
Generieren, unter Verwendung des Diffusionsmodells (120) und eines Prädiktors (130) für ein latentes räumliches Merkmal, des Ausgabebildes (152) in der Zieldomäne, wobei der Prädiktor (130) für das latente räumliche Merkmal ein neuronales Netzwerk umfasst, das konfiguriert ist, um eine Eingabe zu verarbeiten, die mindestens eine oder mehrere Zwischenausgaben (121) beinhaltet, die durch das Diffusionsmodell (120) generiert werden, um eine räumliche Merkmalskarte (132) zu generieren, und wobei das Generieren an jedem von mehreren geführten umgekehrten Diffusionszeitschritten Folgendes umfasst:

Erhalten einer aktuellen latenten Darstellung des Ausgabebildes für den geführten umgekehrten Diffusionszeitschritt;
Verarbeiten, unter Verwendung des Diffusionsmodells (120), einer Diffusionsmodelleingabe (112), die die aktuelle latente Darstellung des Ausgabebildes für den geführten umgekehrten Diffusionsschritt umfasst, um eine aktualisierte latente Darstellung (122) des Ausgabebildes für den geführten umgekehrten Diffusionszeitschritt zu generieren;
Verarbeiten, unter Verwendung des Prädiktors (130) für das latente räumliche Merkmal, einer oder mehrerer Zwischenausgaben (121), die durch das Diffusionsmodell (120) generiert werden, während die aktualisierte latente Darstellung (122) des Ausgabebildes für den geführten umgekehrten Diffusionszeitschritt generiert wird, um eine aktuelle räumliche Merkmalskarte (132) zu generieren;

Bestimmen eines Ähnlichkeitsmaßes der aktuellen räumlichen Merkmalskarte (132) relativ zu einer räumlichen Zielmerkmalskarte (134) des Eingabebildes in der Quelldomäne; und
Generieren einer modifizierten aktualisierten latenten Darstellung (123) des Ausgabebildes für den geführten umgekehrten Diffusionszeitschritt basierend auf dem Ähnlichkeitsmaß.

**2.** Verfahren nach Anspruch 1, wobei der Prädiktor (130) für das latente räumliche Merkmal ein neuronales Mehrschicht-Perzeptron(MLP - multi-layer perceptron)-Netzwerk umfasst, das mehrere vollständig verbundene Schichten mit ReLU-Aktivierungen beinhaltet.

**3.** Verfahren nach einem der Ansprüche 1-2, wobei die Quelldomäne eine Skizzenbilddomäne ist und die Zieldomäne eine fotografische Bilddomäne ist.

**4.** Verfahren nach einem der Ansprüche 1-3, wobei das Verarbeiten, unter Verwendung des Prädiktors (130) für das latente räumliche Merkmal, der einen oder der mehreren Zwischenausgaben (121), die durch das Diffusionsmodell (120) generiert werden, Folgendes umfasst:
Generieren eines Eingabetensors aus der einen oder den mehreren Zwischenausgaben (121), umfassend:

Größenanpassen der einen oder der mehreren Zwischenausgaben (121), so dass sie gleiche räumliche Dimensionen wie der Eingabetensor aufweisen;
Verketten der einen oder der mehreren größenangepassten Zwischenausgaben entlang einer Kanaldimension des Eingabetensors; und
Bereitstellen des Eingabetensors als Eingabe für den Prädiktor (130) für das latente räumliche Merkmal.

**5.** Verfahren nach einem der Ansprüche 1-4, wobei das Bestimmen des Ähnlichkeitsmaßes der aktuellen räumlichen Merkmalskarte (132) relativ zu der räumlichen Zielmerkmalskarte (134) des Eingabebildes in der Quelldomäne Folgendes umfasst:
Verarbeiten des Eingabebildes (102), von Daten, die von dem Eingabebild abgeleitet sind, oder von beidem unter Verwendung des Prädiktors (130) für das latente räumliche Merkmal, um die räumliche Zielmerkmalskarte (134) zu generieren.

**6.** Verfahren nach einem der Ansprüche 1-5, wobei das Generieren der modifizierten aktualisierten latenten Darstellung (123) des Ausgabebildes für den geführten umgekehrten Diffusionszeitschritt basierend auf dem Ähnlichkeitsmaß Folgendes umfasst:

Berechnen eines Gradienten einer Ähnlichkeitsfunktion, die das Ähnlichkeitsmaß in Bezug auf Werte evaluiert, die in der aktuellen latenten Darstellung des Ausgabebildes für den geführten umgekehrten Diffusionszeitschritt beinhaltet sind; und
Bestimmen einer oder mehrerer Aktualisierungen an der aktualisierten latenten Darstellung (122) aus dem Gradienten der Ähnlichkeitsfunktion; und optional
wobei das Bestimmen der einen oder der mehreren Aktualisierungen an der aktualisierten latenten Darstellung (122) aus dem Gradienten der Ähnlichkeitsfunktion Folgendes umfasst:
Normalisieren des Gradienten durch Verwenden eines Normalisierungsterms, der von einer relativen Größe des Gradienten zu der aktualisierten latenten Darstellung (122) für den geführten umgekehrten Diffusionszeitschritt abhängig ist.

**7.** Verfahren nach einem der Ansprüche 1-6, wobei die Diffusionsmodelleingabe (112) ferner einen Rauschpegel für den geführten umgekehrten Diffusionszeitschritt umfasst.

**8.** Verfahren nach einem der Ansprüche 1-7, wobei das Generieren an jedem von mehreren führungsfreien umgekehrten Diffusionszeitschritten Folgendes umfasst:

Erhalten einer aktuellen latenten Darstellung des Ausgabebildes für den führungsfreien umgekehrten Diffusionszeitschritt; und
Verarbeiten, unter Verwendung des Diffusionsmodells (120), einer Diffusionsmodelleingabe (112), die (i) die aktuelle latente Darstellung des Ausgabebildes und (ii) einen Rauschpegel für den führungsfreien umgekehrten Diffusionsschritt umfasst, um eine aktualisierte latente Darstellung (122) des Ausgabebildes für den führungsfreien umgekehrten Diffusionszeitschritt zu generieren, ohne die aktualisierte latente Darstellung (122) unter Verwendung des Prädiktors (130) für das latente räumliche Merkmal zu modifizieren.

9. Verfahren nach einem der Ansprüche 1-8, wobei die räumliche Merkmalskarte (132) eines oder mehrere von Folgenden umfasst:

   eine Kantenmerkmalskarte, eine Saliency-Merkmalskarte oder eine semantische Segmentierungsmerkmalskarte; und optional
   wobei Anzahlen an geführten umgekehrten Diffusionszeitschritten während der Generierung des Ausgabebildes für verschiedene räumliche Merkmalskarten verschieden sind.

10. Verfahren nach einem der Ansprüche 1-9, wobei das Erhalten der aktuellen latenten Darstellung des Ausgabebildes für den geführten umgekehrten Diffusionszeitschritt Folgendes umfasst:
    Verwenden einer modifizierten aktualisierten latenten Darstellung (123) des Ausgabebildes für einen unmittelbar vorhergehenden geführten umgekehrten Diffusionszeitschritt als die aktuelle latente Darstellung des Ausgabebildes für den geführten umgekehrten Diffusionszeitschritt.

11. Verfahren nach einem der Ansprüche 1-10, wobei das Generieren der aktualisierten latenten Darstellung (122) des Ausgabebildes für den geführten umgekehrten Diffusionszeitschritt umfasst:

    Verarbeiten der Diffusionsmodelleingabe (112) unter Verwendung des Diffusionsmodells (120), um eine Diffusionsmodellausgabe zu generieren, die eine Dichtescore-Gradientenschätzung angibt; und
    Abtasten aus einer möglichen Datenverteilung des Ausgabebildes durch Verwenden der Dichtescore-Gradientenschätzung, um die aktualisierte latente Darstellung (122) des Ausgabebildes zu generieren.

12. Verfahren nach einem vorhergehenden Anspruch, ferner umfassend Trainieren des Prädiktors (130) für das latente räumliche Merkmal zusammen mit einem vortrainierten Diffusionsmodell, um eine selbstüberwachte Trainingszielfunktion an mehreren Trainingstupeln zu optimieren, die jeweils (i) ein Bild, (ii) eine räumliche Merkmalskarte des Bildes und (iii) einen Text-Prompt, der das Bild beschreibt, umfassen; und optional
    wobei Trainieren des Prädiktors (130) für das latente räumliche Merkmal Parameterwerte des vortrainierten Diffusionsmodells nicht aktualisiert.

13. Verfahren nach einem vorhergehenden Anspruch, ferner umfassend:
    Empfangen von Eingabetext (104), der eine bestimmte Objektklasse angibt; und wobei:

    das Eingabebild (102) in der Quelldomäne ein Objekt abbildet, das zu der bestimmten Objektklasse gehört;
    das Ausgabebild (152) in der Zieldomäne das Objekt abbildet, das zu der bestimmten Objektklasse gehört; und
    die Diffusionsmodelleingabe (112) ferner den empfangenen Eingabetext (104) umfasst; und optional
    wobei der Eingabetext (104) ferner die Zieldomäne angibt.

14. System, umfassend einen oder mehrere Computer und eine oder mehrere Speichervorrichtungen, die Anweisungen speichern, die betriebsfähig sind, wenn sie durch den einen oder die mehreren Computer ausgeführt werden, den einen oder die mehreren Computer zu veranlassen, die Operationen des jeweiligen Verfahrens nach einem vorhergehenden Anspruch durchzuführen.

15. Computerspeichermedium, codiert mit Anweisungen, die, wenn sie durch einen oder mehrere Computer ausgeführt werden, den einen oder die mehreren Computer veranlassen, die Operationen des jeweiligen Verfahrens nach einem der Ansprüche 1 bis 13 durchzuführen.

## Revendications

1. Procédé mis en œuvre par ordinateur de génération d'une image de sortie dans un domaine cible à l'aide d'un modèle de diffusion (120), dans lequel le procédé comprend :

   la réception d'une image d'entrée (102) dans un domaine source, dans lequel le domaine source est différent du domaine cible ;
   la génération, à l'aide du modèle de diffusion (120) et d'un prédicteur de caractéristique spatiale latente (130), de l'image de sortie (152) dans le domaine cible, dans lequel le prédicteur de caractéristique spatiale latente (130) comprend un réseau neuronal qui est configuré pour traiter une entrée qui comporte au moins une ou plusieurs sorties intermédiaires (121) générées par le modèle de diffusion (120) pour générer une carte de caractéristique spatiale (132), et dans lequel la génération comprend, à chacune de multiples étapes temporelles de diffusion inverse guidée :

l'obtention d'une représentation latente actuelle de l'image de sortie pour l'étape temporelle de diffusion inverse guidée ;
le traitement, à l'aide du modèle de diffusion (120), d'une entrée de modèle de diffusion (112) comprenant la représentation latente actuelle de l'image de sortie pour l'étape de diffusion inverse guidée pour générer une représentation latente mise à jour (122) de l'image de sortie pour l'étape temporelle de diffusion inverse guidée ;
le traitement, à l'aide du prédicteur de caractéristique spatiale latente (130), d'une ou plusieurs sorties intermédiaires (121) générées par le modèle de diffusion (120) lors de la génération de la représentation latente mise à jour (122) de l'image de sortie pour l'étape temporelle de diffusion inverse guidée pour générer une carte de caractéristique spatiale (132) actuelle ;
la détermination d'une mesure de similarité de la carte de caractéristique spatiale (132) actuelle par rapport à une carte de caractéristique spatiale cible (134) de l'image d'entrée dans le domaine source ; et
la génération d'une représentation latente mise à jour modifiée (123) de l'image de sortie pour l'étape temporelle de diffusion inverse guidée sur la base de la mesure de similarité.

**2.** Procédé selon la revendication 1, dans lequel le prédicteur de caractéristique spatiale latente (130) comprend un réseau neuronal de perceptron multicouche (MLP) qui comporte de multiples couches entièrement connectées avec des activations ReLU.

**3.** Procédé selon l'une quelconque des revendications 1 et 2, dans lequel le domaine source est un domaine d'image de croquis et le domaine cible est un domaine d'image photographique.

**4.** Procédé selon l'une quelconque des revendications 1 à 3, dans lequel le traitement, à l'aide du prédicteur de caractéristique spatiale latente (130), des une ou plusieurs sorties intermédiaires (121) générées par le modèle de diffusion (120) comprend :
la génération d'un tenseur d'entrée à partir des une ou plusieurs sorties intermédiaires (121), comprenant :

le redimensionnement des une ou plusieurs sorties intermédiaires (121) pour avoir les mêmes dimensions spatiales que le tenseur d'entrée ;
la concaténation des une ou plusieurs sorties intermédiaires redimensionnées le long d'une dimension de canal du tenseur d'entrée ; et
la fourniture du tenseur d'entrée en tant qu'entrée du prédicteur de caractéristique spatiale latente (130).

**5.** Procédé selon l'une quelconque des revendications 1 à 4, dans lequel la détermination de la mesure de similarité de la carte de caractéristique spatiale (132) actuelle par rapport à la carte de caractéristique spatiale cible (134) de l'image d'entrée dans le domaine source comprend :
le traitement de l'image d'entrée (102), de données dérivées de l'image d'entrée, ou des deux à l'aide du prédicteur de caractéristique spatiale latente (130) pour générer la carte de caractéristique spatiale cible (134).

**6.** Procédé selon l'une quelconque des revendications 1 à 5, dans lequel la génération de la représentation latente mise à jour modifiée (123) de l'image de sortie pour l'étape temporelle de diffusion inverse guidée sur la base de la mesure de similarité comprend :

le calcul d'un gradient d'une fonction de similarité évaluant la mesure de similarité par rapport aux valeurs incluses dans la représentation latente actuelle de l'image de sortie pour l'étape temporelle de diffusion inverse guidée ; et
la détermination d'une ou plusieurs mises à jour de la représentation latente mise à jour (122) à partir du gradient de la fonction de similarité ; et éventuellement
dans lequel la détermination des une ou plusieurs mises à jour de la représentation latente mise à jour (122) à partir du gradient de la fonction de similarité comprend :
la normalisation du gradient à l'aide d'un terme de normalisation qui est dépendant d'une magnitude relative du gradient par rapport à la représentation latente mise à jour (122) pour l'étape temporelle de diffusion inverse guidée.

**7.** Procédé selon l'une quelconque des revendications 1 à 6, dans lequel l'entrée de modèle de diffusion (112) comprend en outre un niveau de bruit pour l'étape de temporelle de diffusion inverse guidée.

8. Procédé selon l'une quelconque des revendications 1 à 7, dans lequel la génération comprend, à chacune de multiples étapes temporelles de diffusion inverse sans guidage :

   l'obtention d'une représentation latente actuelle de l'image de sortie pour l'étape temporelle de diffusion inverse sans guidage ; et
   le traitement, à l'aide du modèle de diffusion (120), d'une entrée de modèle de diffusion (112) comprenant (i) la représentation latente actuelle de l'image de sortie, et (ii) un niveau de bruit pour l'étape de diffusion inverse sans guidage pour générer une représentation latente mise à jour (122) de l'image de sortie pour l'étape temporelle de diffusion inverse sans guidage sans modifier la représentation latente mise à jour (122) à l'aide du prédicteur de caractéristique spatiale latente (130).

9. Procédé selon l'une quelconque des revendications 1 à 8, dans lequel la carte de caractéristique spatiale (132) comprend un ou plusieurs des éléments suivants : une carte de caractéristique de contour, une carte de caractéristique de saillance ou une carte de caractéristique de segmentation sémantique ; et éventuellement
   dans lequel le nombre d'étapes temporelles de diffusion inverse guidée au cours de la génération de l'image de sortie est différent pour des cartes de caractéristique spatiale différentes.

10. Procédé selon l'une quelconque des revendications 1 à 9, dans lequel l'obtention de la représentation latente actuelle de l'image de sortie pour l'étape temporelle de diffusion inverse guidée comprend :
   l'utilisation d'une représentation latente mise à jour modifiée (123) de l'image de sortie pour une étape temporelle de diffusion inverse guidée immédiatement précédente en tant que représentation latente actuelle de l'image de sortie pour l'étape temporelle de diffusion inverse guidée.

11. Procédé selon l'une quelconque des revendications 1 à 10, dans lequel la génération de la représentation latente mise à jour (122) de l'image de sortie pour l'étape temporelle de diffusion inverse guidée comprend :

   le traitement de l'entrée de modèle de diffusion (112) à l'aide du modèle de diffusion (120) pour générer une sortie de modèle de diffusion qui spécifie une estimation de gradient de score de densité ; et
   l'échantillonnage à partir d'une distribution de données possible de l'image de sortie à l'aide de l'estimation de gradient de score de densité pour générer la représentation latente mise à jour (122) de l'image de sortie.

12. Procédé selon une quelconque revendication précédente, comprenant en outre l'entraînement du prédicteur de caractéristique spatiale latente (130) conjointement avec un modèle de diffusion pré-entraîné pour optimiser une fonction objective d'entraînement auto-supervisé sur de multiples tuples d'entraînement qui comprennent chacun (i) une image, (ii) une carte de caractéristique spatiale de l'image et (iii) une invite textuelle qui décrit l'image ; et éventuellement
   dans lequel l'entraînement du prédicteur de caractéristique spatiale latente (130) ne met pas à jour les valeurs de paramètre du modèle de diffusion pré-entraîné.

13. Procédé selon une quelconque revendication précédente, comprenant en outre :
   la réception d'un texte d'entrée (104) qui spécifie une classe d'objet particulière ; et dans lequel :

   l'image d'entrée (102) dans le domaine source représente un objet appartenant à la classe d'objet particulière ;
   l'image de sortie (152) dans le domaine cible représente l'objet appartenant à la classe d'objet particulière ; et
   l'entrée de modèle de diffusion (112) comprend en outre le texte d'entrée (104) reçu ; et éventuellement
   dans lequel le texte d'entrée (104) spécifie en outre le domaine cible.

14. Système comprenant un ou plusieurs ordinateurs et un ou plusieurs dispositifs de stockage stockant des instructions qui sont opérationnelles pour, lorsqu'elles sont exécutées par les un ou plusieurs ordinateurs, amener les un ou plusieurs ordinateurs à réaliser les opérations du procédé respectif selon une quelconque revendication précédente.

15. Support de stockage informatique codé avec des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.

FIG. 1
Target Domain Output Image 152
Modified Updated Latent Representation 123
Current Spatial Feature Map 132
Updated Latent Representation 122
Latent Spatial Feature Predictor 130
Target Spatial Feature Map 134
Intermediate Output 121
Diffusion Model 120
Diffusion Model Input 112
Image Generation System 100
Input Text 104
Source Domain Input Image 102

100

200
212
$z_t$
220
$U(z_t|t,c)$
222
$z_{t-1}$
221
230
$t$
$P$
232
prediction
target
234
$\mathcal{L}($
$\nabla_{z_t}\mathcal{L}$
223
$\tilde{z}_{t-1}$

FIG. 2

300
301
302
$x$
$e$
Encode
Encode
$E(x)$
311
334
Add noise
$t$
$\mathcal{L}$
320
332
$U(z_t|t, c)$
330
$P$
$t$
$l_1(z_t|t, c)$
$l_n(z_t|t, c)$
321

FIG. 3

400
Receive input text
402
Receive an input image in the source domain
404
Generate the output image in the target domain
406

FIG. 4

500
Obtain a current latent representation of the output image
502
Generate an updated latent representation of the output image
504
Generate a current spatial feature map
506
Determine a similarity measure of the current spatial feature map relative to a target spatial feature map
508
Generate a modified updated latent representation of the output image
510

FIG. 5

600

Obtain a current latent representation of the output image
602
Generate an updated latent representation of the output image
604

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63427655


### Non-patent literature cited in the description


- **WANG, TENGFEI et al.** Pretraining is all you need for image-to-image translation.. *arXiv:2205.12952*, 25 May 2022
- **CROITORU, FLORINEL-ALIN et al.** Diffusion models in vision: A survey.. *arXiv:2209.04747v1*, 10 September 2022
- **JONATHAN HO** ; **AJAY JAIN** ; **PIETER ABBEEL**. Denoising diffusion probabilistic models. *Advances in Neural Information Processing Systems*, 2020, vol. 33, 6840-6851